# EUROPEAN PATENT SPECIFICATION

(11) **EP 1 541 452 B1**
(45) Date of publication and mention of the grant of the patent: **07.03.2007**
(21) Application number: 04014326.5
(22) Date of filing: 18.06.2004
(51) Int. Cl.: B62D 35/00, B62D 35/02, H01H 61/01

(54) **A retractable aerodynamic-barrier device which can be pre-arranged underneath the floor panel of a motor vehicle, and a motor vehicle equipped with said device**
Einfahrbare Luftleitvorrichtung, montierbar unter den Boden eines Kraftfahrzeuges, und Kraftfahrzeug mit einer derartigen Vorrichtung
Barrière aérodynamique rétractable, apte à être installée en dessous du plancher d'un véhicule, véhicule équipé d'une telle barrière

(30) Priority: 10.12.2003 IT TO20030989
(43) Date of publication of application: 15.06.2005
(73) Proprietor: C.R.F. SOCIETA' CONSORTILE PER AZIONI, 10043 Orbassano (Torino) (IT)
(72) Inventor: Casella, Mauro, Strada Torino 50 10043 Orbassano(Torino) (IT); Alacqua, Stefano, Strada Torino 50 10043 Orbassano(Torino) (IT); Rinero, Enrico, Strada Torino 50 10043 Orbassano(Torino) (IT); Tregnago, Roberto, Strada Torino 50 10043 Orbassano(Torino) (IT)
(74) Representative: Notaro, Giancarlo

(56) References cited:
- EP-A- 1 216 914
- EP-A- 1 241 351
- WO-A-03/068584
- GB-A- 2 384 215
- US-A- 6 124 662
- US-A1- 2001 010 348

## Description

The present invention relates to. the field of aerodynamic-barrier device (AIR DAMs), which can be pre-arranged underneath the floor panel of a motor vehicle (for example, a car or a lorry) and is of the type comprising: a support that can be fixed to the structure of the motor vehicle (for example, to the floor panel or to the front bumper); at least one panel, which is mounted on the support and is movable between an inoperative position and an operative position; and spring means arranged between the support and the panel, which recall the panel towards its inoperative position.

An aerodynamic-barrier device of the type indicated above is, for example, described and illustrated in the document US-A-4 976 489.

The general problem that underlies the use of said devices is that of improving the characteristics of aerodynamic penetration of a motor vehicle preventing the passage of air underneath the floor panel. This, in general, is obtained by pre-arranging a barrier underneath the front bumper of the motor vehicle, which tends to obstruct the inlet of the channel for passage of the air defined between the ground and the floor panel. In devices of this sort, which have a fixed geometry, the extension in height of the barrier is limited by the need to prevent any interference at low speed with ramps, steps, humps, or the like. In order to prevent said drawback, the aforementioned prior document proposes a movable barrier which reaches its operative position as soon as a threshold speed of the motor vehicle is exceeded. However, in said known device, the displacement of the barrier into its operative position is obtained automatically by aerodynamic effect, thanks to the thrust exerted by the flow of air that impinges upon the barrier when the vehicle is travelling. Said system is hence very simple, but presents the drawback of not enabling a pre-arranged and programmable control of the intervention of the aerodynamic barrier.

The purpose of the present invention is to provide a device of the type indicated above, which will enable, on the one hand, the drawbacks specified above to be overcome and, on the other hand, will present in any case a simple and efficient structure.

With a view to achieving the above purpose, the subject of the present invention is an aerodynamic-barrier device having the characteristics indicated at the beginning of the present description and characterized moreover in that said device comprises shape-memory actuator means for controlling a displacement of the panel from its inoperative position to its operative position.

Shape-memory actuator means have been known for some time and used also in the automotive sector on account of their interesting characteristics from the standpoint of the small overall dimensions, of their low energy consumption and of their low fabrication costs. They exploit the properties of metal alloys, which changes state as a pre-arranged transition temperature varies. For example, the shape-memory actuators are constituted by wires, which shorten as the transition temperature is exceeded, in the case where it is necessary to control a movement of translation, or by wires wound around to form a helix, which perform a rotation about their axis as the transition temperature is exceeded, or again by torsion bars, which are activated as the transition temperature is exceeded, these latter two cases being, for example, preferred when it is necessary to control a movement of rotation. The present applicant is holder of a number of patents regarding shape-memory actuators taken as they are, or shape-memory actuators for controlling components of motor vehicles, such as, for example, a rear-view mirror, a deflector of an air-distribution device, or a component of a seat for motor vehicles.

In the preferred embodiment of the invention, the aforesaid shape-memory actuator means comprise a shape-memory wire and means for supplying an electrical current through the wire for the purpose of bringing about heating thereof. The shape-memory wire can be for example wound in a helix in order to generate a rotation of the controlled member. Once again in the case of a preferred embodiment, the shape-memory wire wound in a helix is arranged according to an axis parallel to and at a distance from the axis of oscillation of the panel of the aerodynamic-barrier device, and there are envisaged means of transmission between said wire and the panel in such a way that the activation of the shape-memory wire will bring about an oscillation of the panel about its articulation axis, towards its operative position.

In the aforesaid preferred embodiment, the means for supply of electrical current through the shape-memory wire comprise electronic-control means and sensor means for detecting the speed of the motor vehicle, said electronic-control means being designed to control the shape-memory wire according to the signal at output from said sensor means. More precisely, the electronic-control means can be programmed for bringing about activation of the shape-memory wire and the consequent displacement of the aerodynamic-barrier device into its operative position, as a pre-arranged threshold value of the speed of the motor vehicle is exceeded. In a simpler solution, it is possible to envisage that the shape-memory wire will remain activated as long as the speed of the motor vehicle remains higher than the threshold value, whilst the elastic-return means for recalling the barrier bring back the latter into the inoperative position when the speed drops below said threshold value, so that the shape-memory actuator is deactivated. For the purpose of saving energy, it is also possible to envisage a shape-memory actuator device of a bistable type, in which there are envisaged clamping means for blocking the panel in its operative position following upon an activation of the shape-memory actuator, so that, once said position has been reached, the supply of current to the actuator can be interrupted. In this case, when the speed of the motor vehicle drops again below the threshold value, a further electrical signal causes deactivation of the clamping means, enabling the elastic-return means to bring the barrier back into its inoperative position.

The above and further characteristics and advantages of the invention will emerge from the ensuing description with reference to the annexed drawings, which are provided purely by way of nonlimiting example and in which:
Figures 1 and 2 are a schematic cross-sectional view of the front part of a motor vehicle, in which an aerodynamic-barrier device according to the invention is represented, respectively, in its inoperative position and in its operative position;
Figures 3 and 4 are perspective views of a panel forming part of the device according to the invention, illustrated in the inoperative condition and in the operative condition, respectively;
Figure 5 is a schematic perspective view which shows the control system of an individual panel;
Figure 6 is a perspective view which shows the entire device pre-arranged underneath a body of a motor vehicle; and
Figure 7 is a perspective view at an enlarged scale of a detail of the device of Figure 6.

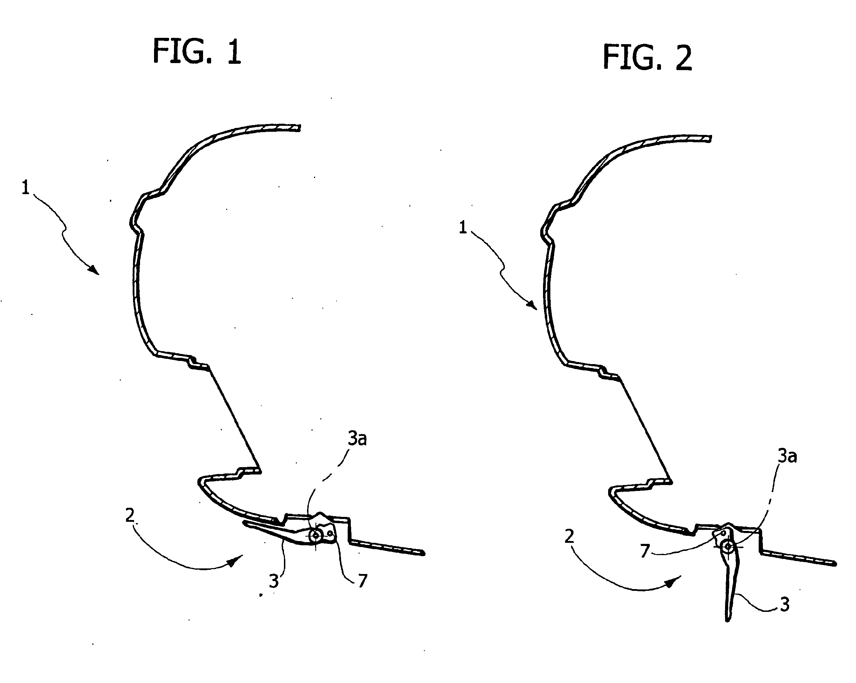

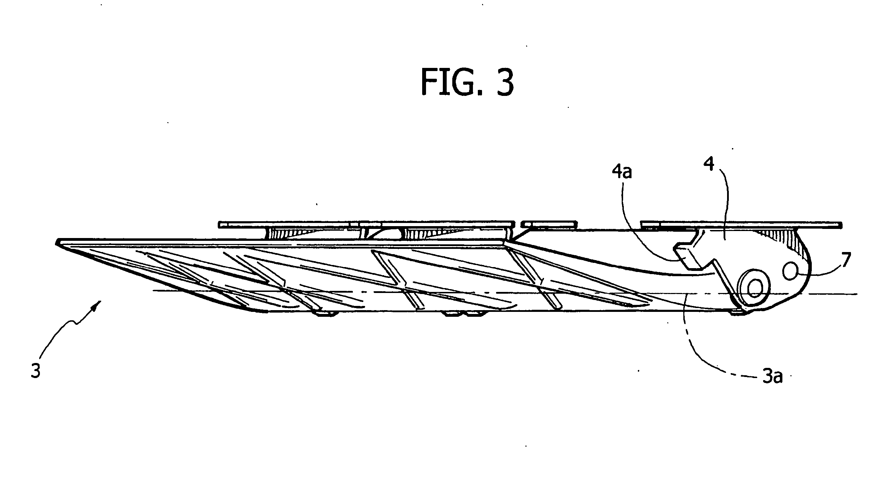

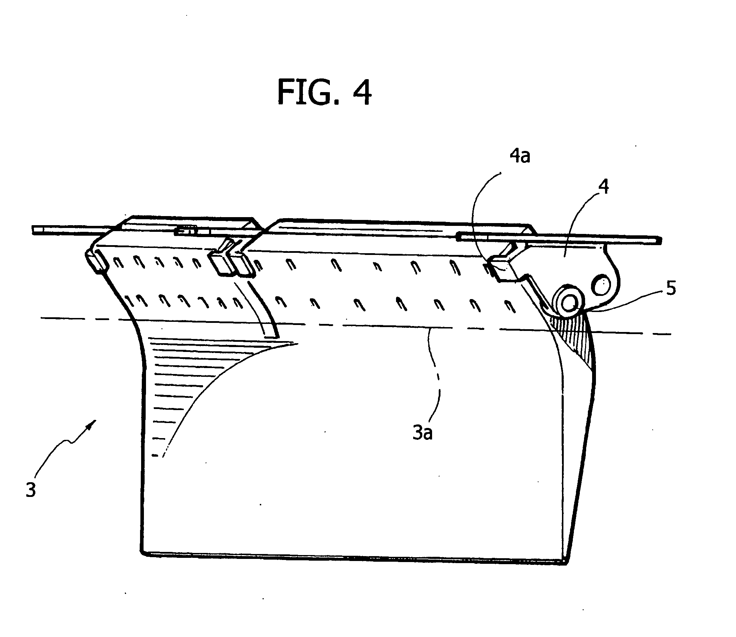

With reference to Figures 1, 2 and 6, the reference number 1 designates, as a whole, a front bumper of a motor vehicle, which is provided, at the bottom, with an aerodynamic-barrier device 2. In the example illustrated, the device 2 comprises a plurality of panels 3, each of which is mounted oscillating about a substantially horizontal axis 3a on a support 4 (which is clearly visible in Figures 3 and 4).

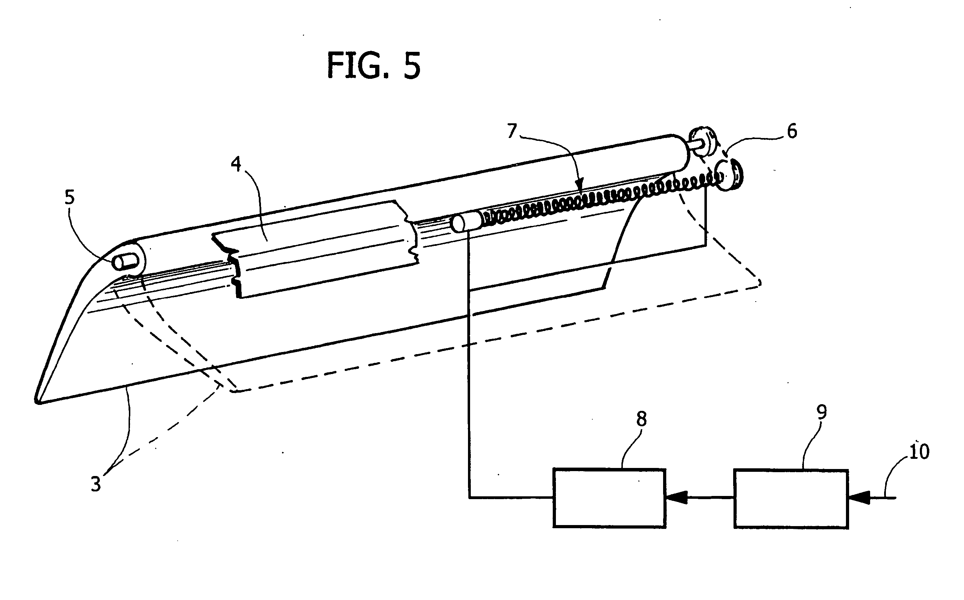

The support 4 is designed to be fixed via any suitable connection means underneath the bumper 1 and supports the respective panel 3 in rotation about said axis 3a. In the example illustrated, each panel 3 is rigidly connected to a shaft 5 mounted oscillating about the axis 3a on the support 4. A rotation of the shaft 5 of each panel 3 is controlled, via a belt drive 6, by a shape-memory actuator 7 formed by a shape-memory wire wound in a helix. The shape-memory wire 7 is activated by being traversed by electrical current. The means for supply of electrical current are designated, as a whole, by 8 in Figure 5 and are controlled by electronic-control means 9 on the basis of a signal 10 coming from a sensor (not illustrated) for detecting the speed of the motor vehicle. The electronic means 9 are programmed for bringing about actuation of the shape-memory actuator means 8 when a pre-arranged speed is exceeded.

When the shape-memory actuator 7 is deactivated, the panel is recalled into its inoperative position, illustrated in Figure 1, by spring means (not illustrated) formed by a helical spring arranged along the axis 3a. When the threshold speed for which the intervention of the aerodynamic barrier is programmed is exceeded by the motor vehicle, the electronic-control means 9 cause activation of the shape-memory actuator 7, which hence brings about a rotation of the respective panel 3 into the operative position illustrated in Figure 3, against the action of the spring means mentioned above.

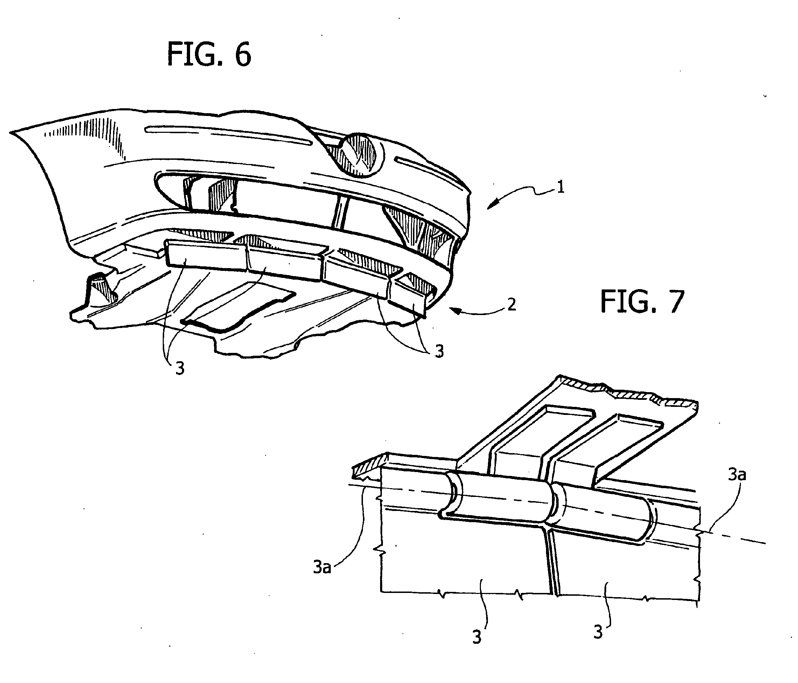

As may be seen in Figure 4, when the above operative position is reached, the top edge of the panel 3 comes into contact against end-of-travel surfaces 4a of the panel. Figure 7 is a perspective view of the detail of the articulation of two mutually adjacent panels 3.

As already mentioned above, in association with the shape-memory actuator 7, for example, in a position corresponding to the drive 6, there can be provided an engagement device of any known type, which maintains the panel 3 in the operative position after said position has been reached. In this way, the electrical-current supply to the shape-memory wire 7 can be interrupted, in any case guaranteeing that the panel will remain in its operative position as long as the speed of the motor vehicle remains above the programmed speed threshold. When the speed of the motor vehicle drops below the threshold value, the electronic-control means deactivate the clamping means for enabling the panel 3 to return into its inoperative position, as a result of its elastic-return means. It would also be possible to eliminate the elastic-return means and envisage two shape-memory actuators one for controlling exit and one for controlling retraction of the panel.

Thanks to the characteristics indicated above, the aerodynamic characteristics of the motor vehicle are decidedly improved, in so far as above a pre-arranged speed a passage of the air underneath the floor panel is prevented. At the same time, at low speeds of the motor vehicle, the barrier is retracted into its inoperative position so as not to constitute an hindrance during possible displacements at low speed over irregular terrain or on ramps, steps, humps, or the like.

Of course, each panel 3 can be made of a material resistant to wear, with a low coefficient of friction, or else it is also possible to envisage provision of the panel with a replaceable end wear band.

The pre-arrangement of electronically-controlled shape-memory actuator means makes possible ample flexibility for deciding the strategy for controlling intervention of the aerodynamic barrier, whether according to the speed of the motor vehicle or possibly even according to further parameters or also, if so desired, subordinately to intentional manual control by the driver.

The device according to the invention is suited also to being used as masking barrier in front of a wheel of the motor vehicle or in front of specific elements projecting from underneath the floor panel, such as, for example, in front of the suspensions of the motor vehicle.

Of course, without prejudice to the principle of the invention, the details of construction and the embodiments may vary widely with respect to what is described and illustrated herein purely by way of example.

## Claims

1. An aerodynamic-barrier device which can be pre-arranged underneath the floor panel of a motor vehicle, comprising: a support (4) that can be fixed to the structure of the motor vehicle; at least one panel (3), which is mounted on the support (4) and is movable between an inoperative position and an operative position; and spring means arranged between the support (4) and the panel (3), which recall the panel towards its inoperative position,
said device being **characterized in that** it further comprises shape-memory actuator means (7) for controlling a displacement of the panel (3) from its inoperative position to its operative position.

2. The aerodynamic-barrier device according to Claim 1, **characterized in that** the shape-memory actuator means comprise a shape-memory wire (7) and means (8, 9) for supplying an electrical current through the wire (7) for the purpose of bringing about heating thereof.

3. The aerodynamic-barrier device according to Claim 2, **characterized in that** said panel (3) is mounted on the support (4) so that it oscillates about an axis (3a) between its inoperative position and its operative position, and **in that** said shape-memory wire (7) is formed by a wire wound in a helix, which causes a rotation of one end thereof about its axis when it is activated.

4. The aerodynamic-barrier device according to Claim 3, **characterized in that** said shape-memory wire wound in a helix (7) is arranged along an axis parallel to and at a distance from the axis (3a) of oscillation of the panel (3), and **in that** there are envisaged drive means (6) for mechanical connection of the shape-memory wire (7) to the panel (3).

5. The aerodynamic-barrier device according to Claim 2, **characterized in that** the aforesaid means for supplying electrical current through the shape-memory wire (7) comprise electronic-control means (9) and sensor means (10) for detecting the speed of the motor vehicle, said electronic-control means (9) being designed to activate the means for supply of electrical current through the shape-memory wire (7) according to the signal (10) emitted by said sensor means.

6. The aerodynamic-barrier device according to Claim 5, **characterized in that** said electronic-control means (9) bring about activation of the shape-memory actuator means (7) when the speed of the motor vehicle exceeds a pre-arranged and programmable threshold value.

7. The aerodynamic-barrier device according to Claim 2, **characterized in that** there are envisaged clamping means for maintaining the panel (3) in its operative position also after a deactivation of said shape-memory actuator means (7) and means for releasing said clamping means when the speed of the motor vehicle drops below said pre-arranged threshold value.

8. The aerodynamic-barrier device according to any one of the preceding claims, **characterized in that** it envisages an aligned series of panels (3), each mounted oscillating about a respective axis of oscillation (3a).

9. The aerodynamic-barrier device according to any one of the preceding claims, **characterized in that** it is fixed underneath a front bumper of a motor vehicle.

10. The aerodynamic-barrier device according to Claim 1, **characterized in that** it is mounted in front of a wheel of the motor vehicle.

11. The aerodynamic-barrier device according to Claim 1, **characterized in that** it is mounted underneath the floor panel of the motor vehicle in front of parts of the motor vehicle projecting from underneath the floor panel.

12. The aerodynamic-barrier device according to Claim 1, **characterized in that** the shape-memory actuator means comprise: a shape-memory element (7); means (8) for supplying an electrical current to said element (7) in order to bring about heating thereof; and electronic-control means (9) for controlling activation and deactivation of the means for supply of electrical current, as a function of one or more operating parameters of the motor vehicle, according to a pre-arranged programmable logic.

13. A motor vehicle, **characterized in that** it is provided with one or more aerodynamic-barrier devices according to one or more of the preceding claims.

## Patentansprüche

1. Luftleitvorrichtung, die unter dem Bodenblech eines Kraftfahrzeuges vormontiert werden kann, umfassend: eine Halterung (4), die an dem Aufbau des Kraftfahrzeuges befestigt werden kann; zumindest eine Verkleidung (3), die an der Halterung (4) angebracht ist und zwischen einer unwirksamen Stellung und einer wirksamen Stellung bewegbar ist; und eine zwischen der Halterung (4) und der Verkleidung (3) angeordnete Federeinrichtung, die die Verkleidung in Richtung ihrer unwirksamen Stellung zurücknimmt,
wobei die Vorrichtung **dadurch gekennzeichnet ist, dass** sie des Weiteren eine Formgedächtnis-Antriebselementeinrichtung (7) zum Steuern einer Verschiebung der Verkleidung (3) aus ihrer unwirksamen Stellung in ihre wirksame Stellung umfasst.

2. Luftleitvorrichtung nach Anspruch 1, **dadurch gekennzeichnet, dass** die Formgedächtnis-Antriebselementeinrichtung einen Formgedächtnis-Draht (7) und eine Einrichtung (8, 9) zum Zuführen von elektrischem Strom durch den Draht (7) für den Zweck aufweist, eine Erwärmung desselben zu bewirken.

3. Luftleitvorrichtung nach Anspruch 2, **dadurch gekennzeichnet, dass** die Verkleidung (3) auf der Halterung (4) angebracht ist, so dass sie sich um eine Achse (3a) zwischen ihrer unwirksamen Stellung und ihrer wirksamen Stellung hin- und herbewegt, und **dadurch**, dass der Formgedächtnis-Draht (7) durch einen Draht gebildet wird, der in einer Schraubenlinie gewickelt ist, was eine Drehung von einem Ende desselben um seine Achse bewirkt, wenn er unter Strom gesetzt wird.

4. Luftleitvorrichtung nach Anspruch 3, **dadurch gekennzeichnet, dass** der in einer Schraubenlinie (7) gewickelte Formgedächtnis-Draht längs einer Achse parallel zu der Schwenkachse (3a) der Verkleidung (3) und in einem Abstand davon angeordnet ist, und dass eine Antriebseinrichtung (6) zur mechanischen Verbindung des Formgedächtnis-Drahtes (7) mit der Verkleidung (3) beabsichtigt ist.

5. Luftleitvorrichtung nach Anspruch 2, **dadurch gekennzeichnet, dass** die oben erwähnte Einrichtung zum Zuführen von elektrischem Strom durch den Formgedächtnis-Draht (7) eine elektronische Steuereinrichtung (9) und eine Sensoreinrichtung (10) zum Detektieren der Geschwindigkeit des Kraftfahrzeuges umfasst, wobei die elektronische Steuereinrichtung (9) dazu bestimmt ist, die Einrichtung zum Zuführen von elektrischem Strom durch den Formgedächtnis-Draht (7) entsprechend dem Signal (10) zu aktivieren, das durch die Sensoreinrichtung ausgesendet wird.

6. Luftleitvorrichtung nach Anspruch 5, **dadurch gekennzeichnet, dass** die elektronische Steuereinrichtung (9) eine Aktivierung der Formgedächtnis-Antriebselementeinrichtung (7) bewirkt, wenn die Geschwindigkeit des Kraftfahrzeuges einen vorher bestimmten und programmierbaren Schwellenwert überschreitet.

7. Luftleitvorrichtung nach Anspruch 2, **dadurch gekennzeichnet, dass** eine Klemmeinrichtung beabsichtigt ist, um die Verkleidung (3) in ihrer wirksamen Stellung auch nach einer Deaktivierung der Formgedächtnis-Antriebselementeinrichtung (7) zu halten, und eine Einrichtung zur Freigabe der Klemmeinrichtung, wenn die Geschwindigkeit des Kraftfahrzeuges unter den vorher bestimmten Schwellenwert abfällt.

8. Luftleitvorrichtung nach einem der vorhergehenden Ansprüche, **dadurch gekennzeichnet, dass** eine ausgerichtete Reihe von Verkleidungen (3) beabsichtigt ist, die, sich jeweils um eine entsprechende Schwenkachse (3a) hin- und herbewegend, angebracht sind.

9. Luftleitvorrichtung nach einem der vorhergehenden Ansprüche, **dadurch gekennzeichnet, dass** sie unter einem vorderen Stoßfänger eines Kraftfahrzeuges befestigt wird.

10. Luftleitvorrichtung nach Anspruch 1, **dadurch gekennzeichnet, dass** sie vor einem Rad des Kraftfahrzeuges angebracht wird.

11. Luftleitvorrichtung nach Anspruch 1, **dadurch gekennzeichnet, dass** sie unter dem Bodenblech des Kraftfahrzeuges vor Teilen des Kraftfahrzeuges, die von der Unterseite des Bodenblechs hervorstehen, montiert wird.

12. Luftleitvorrichtung nach Anspruch 1, **dadurch gekennzeichnet, dass** die Formgedächtnis-Antriebselementeinrichtung umfasst: ein Formgedächtnis-Element (7), eine Einrichtung (8) zum Zuführen von elektrischem Strom zu dem Element (7), um eine Erwärmung desselben zu bewirken, und eine elektronische Steuereinrichtung (9), um eine Aktivierung und Deaktivierung der Einrichtung zum Zuführen von elektrischem Strom als eine Funktion von einem oder mehreren Betriebsparametern des Kraftfahrzeuges entsprechend einer vorher eingerichteten, programmierbaren Logik zu steuern.

13. Kraftfahrzeug, **dadurch gekennzeichnet, dass** es mit einer oder mehreren Luftleitvorrichtungen nach einem oder mehreren der vorhergehenden Ansprüche versehen ist.

## Revendications

1. Barrière aérodynamique qui peut être pré-agencée en dessous du panneau de plancher d'un véhicule automobile, comprenant : un support (4) qui peut être fixé à la structure du véhicule à moteur ; au moins un panneau (3) qui est monté sur le support (4) et peut se déplacer entre une position inactive et une position active ; et un moyen de ressort agencé entre le support (4) et le panneau (3), qui rappelle le panneau vers sa position inactive,
ladite barrière étant **caractérisée en ce qu'**elle comprend en outre des moyens d'actionnement à mémoire de forme (7) pour commander un déplacement du panneau (3) depuis sa position inactive vers sa position active.

2. Barrière aérodynamique selon la revendication 1, **caractérisée en ce que** les moyens d'actionnement à mémoire de forme comprennent un fil à mémoire de forme (7) et des moyens (8, 9) pour fournir un courant électrique par l'intermédiaire du fil (7) dans le but d'entraîner le chauffage de celui-ci.

3. Barrière aérodynamique selon la revendication 2, **caractérisée en ce que** ledit panneau (3) est monté sur le support (4) de sorte qu'il oscille autour d'un axe (3a) entre sa position inactive et sa position active, et **en ce que** ledit fil à mémoire de forme (7) est formé par un fil enroulé en hélice, qui provoque une rotation d'une extrémité de celui-ci autour de son axe lorsqu'il est activé.

4. Barrière aérodynamique selon la revendication 3, **caractérisée en ce que** ledit fil à mémoire de forme enroulé en hélice (7) est agencé le long d'un axe parallèle à et à une distance de l'axe (3a) d'oscillation du panneau (3), et **en ce que** des moyens d'entraînement sont prévus (6) pour le raccordement mécanique du fil à mémoire de forme (7) au panneau (3).

5. Barrière aérodynamique selon la revendication 2, **caractérisée en ce que** les moyens susdits pour fournir du courant électrique par l'intermédiaire du fil à mémoire de forme (7) comprennent des moyens de commande électronique (9) et des moyens de capteur (10) pour détecter la vitesse du véhicule automobile, lesdits moyens de commande électronique (9) étant conçus pour activer les moyens pour fournir du courant électrique par l'intermédiaire du fil à mémoire de forme (7) selon le signal (10) émis par lesdits moyens de capteur.

6. Barrière aérodynamique selon la revendication 5, **caractérisée en ce que** lesdits moyens de commande électronique (9) entraînent l'activation des moyens d'actionnement à mémoire de forme (7) lorsque la vitesse du véhicule automobile dépasse une valeur seuil pré-agencée et programmable.

7. Barrière aérodynamique selon la revendication 2, **caractérisée en ce que** des moyens de serrage sont prévus pour maintenir le panneau (3) dans sa position active également après une désactivation desdits moyens d'actionnement à mémoire de forme (7) et des moyens pour libérer lesdits moyens de serrage lorsque la vitesse du véhicule automobile chute en dessous de ladite valeur seuil pré-agencée.

8. Barrière aérodynamique selon l'une quelconque des revendications précédentes, **caractérisée en ce qu'**elle prévoit une série alignée de panneaux (3), chacun monté de manière oscillante autour d'un axe d'oscillation respectif (3a).

9. Barrière aérodynamique selon l'une quelconque des revendications précédentes, **caractérisée en ce qu'**elle est fixée en dessous d'un pare-chocs avant d'un véhicule automobile.

10. Barrière aérodynamique selon la revendication 1, **caractérisée en ce qu'**elle est montée devant une roue du véhicule automobile.

11. Barrière aérodynamique selon la revendication 1, **caractérisée en ce qu'**elle est montée en dessous du panneau de plancher du véhicule automobile devant des parties du véhicule automobile se projetant depuis le dessous du panneau de plancher.

12. Barrière aérodynamique selon la revendication 1, **caractérisée en ce que** les moyens d'actionnement à mémoire de forme comprennent : un élément d'actionnement à mémoire de forme (7) ; des moyens (8) pour fournir un courant électrique audit élément (7) afin d'entraîner le chauffage de celui-ci ; et des moyens de commande électronique (9) pour commander l'activation et la désactivation des moyens pour fournir du courant électrique, en fonction d'un ou plusieurs paramètres d'action du véhicule automobile, selon une logique programmable pré-agencée.

13. Véhicule automobile **caractérisé en ce qu'**il est muni d'une ou plusieurs barrières aérodynamiques selon une ou plusieurs des revendications précédentes.
